# EUROPÄISCHE PATENTSCHRIFT

(11) **EP 2 322 411 B1**
(45) Veröffentlichungstag und Bekanntmachung des Hinweises auf die Patenterteilung: **19.09.2012**
(21) Anmeldenummer: 10189964.9
(22) Anmeldetag: 04.11.2010
(51) Int. Cl.: B62D 15/02, B60W 30/06

(54) **Verfahren zur Erkennung einer zum Einparken eines Fahrzeugs geeigneten Parklücke**
Method for detecting a parking space suitable for parking
Procédé de reconnaissance d'une place de stationnement appropriée au stationnement d'un véhicule

(30) Priorität: 12.11.2009 DE 102009046656
(43) Veröffentlichungstag der Anmeldung: 18.05.2011
(73) Patentinhaber: Robert Bosch GmbH, 70442 Stuttgart (DE)
(72) Erfinder: Niemz, Volker, 71277 Rutesheim (DE)

(56) Entgegenhaltungen:
- EP-A1- 1 642 767

## Beschreibung

### Stand der Technik

Die Erfindung betrifft ein Verfahren zur Erkennung einer zum Einparken eines Fahrzeugs geeigneten Parklücke.

Um den Fahrer eines Fahrzeugs beim Einparken des Fahrzeugs zu unterstützen, sind unterschiedliche Einparksysteme bekannt. So existieren zum Beispiel Systeme, die dem Fahrer Informationen zum Abstand zu Objekten in der Umgebung des Fahrzeugs liefern und der Fahrer anhand des Abstandes abschätzen kann, wie er seine Rangierzüge durchzuführen hat, um das Fahrzeug einzuparken. Die Anzeige des Abstandes zu den Objekten erfolgt dabei im Allgemein akustisch und/oder optisch. Eine akustische Anzeige erfolgt zum Beispiel durch Tonsignale, wobei der Abstand zwischen den einzelnen Tonsignalen und gegebenenfalls auch die Tonhöhe mit abnehmendem Abstand zu einem Objekt abnimmt. Um auf die Richtung zu einem Objekt zu schließen, ist es weiterhin möglich, die Töne aus einer entsprechenden Richtung im Fahrzeug zu senden. Bei optischen Systemen sind zum Beispiel Systeme am Markt, die den Abstand zu einem Objekt mit Hilfe von Balken-LEDs anzeigen. Hierbei wird im Allgemeinen mit abnehmendem Abstand zu einem Objekt die Anzahl der aufleuchtenden LEDs größer. Zudem ist es üblich, dass sich auch die Farbe mit abnehmendem Abstand ändert.

Neben derartigen Systemen, die dem Fahrer lediglich Hinweise zum Abstand zu Objekten in der Umgebung des Fahrzeugs liefern, sind auch Systeme bekannt, die zunächst erfassen, ob ein freier Bereich zwischen zwei Fahrzeugen oder zwischen zwei beliebigen anderen Objekten als Parklücke geeignet ist. Hierzu wird bei einer Parallelparklücke insbesondere die Länge der Parklücke erfasst. Wenn sich die Lücke als Parklücke eignet, berechnet das System eine Trajektorie, die den optimalen Weg des Fahrzeugs in die Parklücke darstellt. Um entlang der Trajektorie in die Parklücke einfahren zu können, werden dem Fahrer zum Beispiel über eine Anzeigevorrichtung die hierzu notwendigen Lenkwinkel vorgegeben und der Fahrer soll entsprechend der Vorgabe das Fahrzeug lenken, so dass dieses entlang der Trajektorie in die Parklücke einfahren kann. Alternativ sind auch Systeme am Markt, bei denen die Lenkeinstellungen automatisch vom System übernommen werden. Hierzu ist im Allgemeinen ein geeigneter Stellantrieb vorgesehen, der die lenkbaren Räder des Fahrzeugs in die entsprechend erforderliche Stellung bewegt, die zum Überfahren der Trajektorie notwendig ist. Bei einem solchen System übernimmt der Fahrer jedoch weiterhin die Längsführung, das heißt das Beschleunigen und Bremsen des Fahrzeugs. Um das Fahrzeug rechtzeitig anzuhalten erhält der Fahrer auch hier Informationen über den Abstand des Fahrzeugs zu Objekten in der Umgebung des Fahrzeugs.

Des Weiteren sind auch Systeme bekannt, bei denen auch die Längsführung, das heißt das Beschleunigen und Abbremsen des Fahrzeugs vom System zur Unterstützung des Fahrers übernommen wird. Dem Fahrer obliegt hier noch die Überwachung des Einparkvorganges.

Bei derzeitigen Systemen wird insbesondere bei der Erfassung der Parklücke auch die Tiefe der Parklücke bei einer Längsparklücke erfasst. Sollte das einzuparkende Fahrzeug halbseitig auf einem Bordstein stehen, wird jedoch der Bordstein als Hindernis erkannt und die Parklücke als ungeeignet verworfen. Alternativ ist es auch möglich, dass eine Parklücke, die ein Überfahren eines hohen Bordsteins erforderlich macht, dem Fahrer als gültige Parklücke angeboten wird, obwohl ein Überfahren des Bordsteins zu einer ungewünschten Beschädigung am Fahrzeug führen könnte.

Ein Einparksystem, bei dem der Fahrer gewarnt wird, wenn im Bereich einer Parklücke ein hoher Bordstein oder ein ähnlicher Absatz vorhanden ist, ist zum Beispiel in DE-A 10 2005 048 947 beschrieben. Nachteil des Systems ist jedoch, dass die Parklücke zunächst als eine geeignete Parklücke definiert wird und erst während des Einparkvorganges der Fahrer die Warnung erhält, dass ein hoher Bordstein oder ein ähnlicher Absatz in der Parklücke vorhanden ist.

Der nächstliegende Stand der Technik ist der EP 1 642 767 A1 zu sehen.

### Offenbarung der Erfindung

### Vorteile der Erfindung

Ein erfindungsgemäßes Verfahren zur Erkennung einer zum Einparken eines Fahrzeugs geeigneten Parklücke umfasst folgende Schritte:
(a) Erfassen der Umgebung des Fahrzeugs und Beurteilen, ob ein für eine Parklücke ausreichend großer freier Platz vorliegt,
(b) Prüfen, ob der für eine Parklücke ausreichend große freie Platz einen Bordstein aufweist, der zum Erreichen einer Parkposition in der Parklücke mit mindestens einem Rad des Fahrzeugs überwunden werden muss,
(c) Verwerfen des freien Platzes als geeignete Parklücke, wenn ein Überfahren eines Bordsteins beim Einparkvorgang vermieden werden soll oder aufgrund des Bordsteins größere Abmessungen des freien Platzes erforderlich sind.

Im Rahmen der vorliegenden Erfindung ist unter Bordstein nicht nur ein klassischer Bordstein zu verstehen sondern auch jedes beliebige andere stufenförmige Hindernis. Derartige stufenförmige Hindernisse können zum Beispiel auch Balken oder ähnliche Objekte sein, die sich im Bereich einer Parklücke befinden.

Durch das Verwerfen des freien Platzes als geeignete Parklücke, wenn ein Überfahren eines Bordsteins beim Einparkvorgang vermieden werden soll, wird verhindert, dass das Fahrzeug bei einem Einparkvorgang zum Beispiel aufgrund eines zu hohen zu überfahrenden Bordsteins beschädigt werden kann. Auch kann vermieden werden, dass das Fahrzeug mit den freien Platz begrenzenden Objekten zusammenstößt, wenn die Abmessungen des freien Platzes zwar ausreichend wären, wenn das Parken in eine Parklücke ohne ein Überfahren eines Bordsteins erfolgt, jedoch aufgrund des zum Überfahren des Bordsteins erforderlichen höheren Momentes und der damit verbundenen Beschleunigung des Fahrzeugs nach Überwinden des Bordsteins eine größere Länge der Parklücke erforderlich ist, um das Fahrzeug rechtzeitig vor einer Kollision mit dem Objekt abbremsen zu können und somit der erfasste Freibereich nicht ausreichend groß ist. In diesem Fall wird der freie Platz dann ebenfalls aufgrund der zu geringen Abmessungen als geeignete Parklücke verworfen.

Zum Erfassen der Umgebung des Fahrzeugs und Beurteilen, ob ein für eine Parklücke ausreichend großer freier Platz vorliegt, kann jedes beliebige, dem Fachmann bekannte Verfahren und System zur Erfassung der Umgebung des Fahrzeugs eingesetzt werden. Systeme zur Erfassung der Umgebung des Fahrzeugs umfassen üblicherweise Abstandssensoren, die mit einer Auswerteeinheit verbunden sind. Als Abstandssensoren werden zum Beispiel Ultraschallsensoren, Infrarotsensoren, Radarsensoren, kapazitive Sensoren oder LIDAR-Sensoren eingesetzt. Zur Erfassung des Abstandes des Fahrzeugs zu einem Objekt wird vom Sensor ein Signal gesendet und ein von dem Objekt reflektiertes Echo empfangen. Aus der Laufzeit des Signals vom Aussenden bis zum Empfang des Echos kann der Abstand zu einem Objekt bestimmt werden. Da jedoch die Signale im Allgemeinen wellenförmig ohne spezifische Richtung vom Sensor ausgesendet werden, wird durch dieses Verfahren lediglich der Abstand zu einem Objekt, jedoch nicht die Richtung des Objektes erfasst. Zur Richtungserfassung sind im Allgemeinen zwei Sensoren erforderlich. Der Schnittpunkt der mit dem ermittelten Abstand als Radius gebildeten Kreisbögen liefert dann die Richtung, in der sich das detektierte Objekt befindet. Die Bestimmung von Abstand und Richtung eines Objekts zu den Sensoren erfolgt dabei üblicherweise durch Trilaterationsverfahren oder Triangulationsverfahren.

Neben der Erfassung der Umgebung mit Abstandssensoren ist alternativ auch die Erfassung mit optischen Sensoren, beispielsweise Kameras möglich. In diesem Fall erfolgt die Auswertung mit Hilfe eines geeigneten Bildverarbeitungssystems.

Die zur Erfassung der Umgebung eingesetzten Abstandssensoren befinden sich üblicherweise im Frontbereich und im Heckbereich des Fahrzeugs. Um eine geeignete Parklücke, insbesondere eine Parallelparklücke auszuwählen, sind vorzugsweise zusätzlich Sensoren derart angebracht, dass der Bereich neben dem Fahrzeug erfasst werden kann.

Aus den erfassten Umgebungsdaten wird eine Umgebungskarte erzeugt. Aus der Umgebungskarte lässt sich entnehmen, ob ein freier Platz vorliegt. Zudem können die

Maße des freien Platzes erfasst werden und so abgeschätzt werden, ob der gefundene freie Platz ausreichend groß ist, um als Parklücke zu dienen.

Neben der Erfassung von Objekten, die den als Parklücke identifizierten freien Platz begrenzen, lässt sich mit den zur Erfassung der Umgebung eingesetzten Sensoren bei geeigneter Einstellung auch erfassen, ob im Bereich des freien Platzes ein niedriges, überfahrbares Hindernis, beispielsweise ein Bordstein vorhanden ist. Ein als Abstandssensor eingesetzter Sensor sendet üblicherweise die Signale in Form eines Signalkegels aus. Dies führt dazu, dass niedrige Objekte wie Bordsteine in einer größeren Entfernung zunächst vom Sensor erfasst werden und bei Annäherung des Sensors an das niedrige Objekt aus dem Erfassungsbereich verschwinden, da der Bordstein unter den Signalkegel verschwindet. Um zum Beispiel beim Erfassen der Umgebung während des Vorbeifahrens zu erkennen, ob im Bereich des freien Platzes ein Bordstein vorhanden ist, lassen sich zum Beispiel auch Sensoren entsprechend derart einstellen, dass niedrige Objekte als solche erkannt werden. Dies ist zum Beispiel durch eine Änderung der Empfindlichkeit und damit einer Änderung des Öffnungswinkels des Signalkegels möglich. Auch können unterschiedlich eingestellte Sensoren zur Erkennung, ob ein niedriges Objekt im Bereich des freien Platzes liegt, verwendet werden.

Neben einem in einer Parallelparklücke vorhandenen Bordstein, der zum Einparken überwunden werden muss, weil die Parklücke so ausgelegt ist, dass ein Fahrzeug halbseitig auf dem Bordstein parken soll, ist es auch möglich, dass eine Querparklücke oder eine Parklücke, in die schräg eingeparkt werden soll, so ausgestaltet ist, dass ein Bordstein überfahren werden muss. Auch in diesem Fall kann bei Erkennen eines Bordsteins innerhalb des als Parklücke identifizierten freien Bereichs der freie Platz als geeignete Parklücke verworfen werden, wenn das Überfahren eines Bordsteins vermieden werden soll.

Das Überfahren eines Bordsteins soll zum Beispiel dann vermieden werden, wenn das Befahren zu einer Beschädigung des Fahrzeugs führen kann. So können zum Beispiel Beschädigungen im Bereich des Fahrzeugs auftreten, wenn der Bordstein eine Höhe aufweist, die oberhalb einer vorgegebenen Maximalhöhe liegt. In diesem Fall ist es zum Beispiel möglich, dass das Fahrzeug beim Überfahren des Bordsteins auf dem Bordstein aufsitzt und so zu einer Beschädigung im Unterbodenbereich des Fahrzeugs kommen kann. Auch können, insbesondere wenn der Bordstein eine gewisse Höhe überschreitet, Reifen und Felgen des Fahrzeugs beschädigt werden. Dies ist insbesondere dann der Fall, wenn das zum Überfahren des Bordsteins notwendige Moment nur dann aufgebracht werden kann, wenn das Fahrzeug mit einer vergleichsweise hohen Geschwindigkeit den Bordstein überfahren muss, das heißt zunächst Schwung holen muss, um den Bordstein überwinden zu können.

Ein Überfahren eines Bordsteins beim Einparkvorgang soll ebenfalls vermieden werden, wenn der Luftdruck des mindestens einen Reifens, der den Bordstein überfahren soll, von einem vorgegebenen Soll-Luftdruckbereich abweicht. Das Überfahren des Bordsteins soll in diesem Fall sowohl vermieden werden, wenn der Luftdruck im Reifen zu hoch ist als auch wenn der Luftdruck im Reifen zu niedrig ist. Insbesondere soll ein Bordstein nicht überfahren werden, wenn der Luftdruck im Reifen zu niedrig ist, um so Beschädigungen des Reifens zu vermeiden.

Insbesondere wenn die Entscheidung, ob das Überfahren eines Bordsteins beim Einparkvorgang vermieden werden soll vom Luftdruck des mindestens einen Reifens, der den Bordstein überfahren soll, abhängig ist, ist die Entscheidung im Allgemeinen auch auf die Höhe des Bordsteins abzustellen. So ist es zum Beispiel möglich, dass bei einem niedrigen Luftdruck im Reifen noch ein niedriger Bordstein überfahren werden darf, mit zunehmendem Luftdruck im Reifen auch der Bordstein, der noch überfahren werden darf, höher werden kann. Somit hängt die vorgegebene Maximalhöhe, oberhalb derer ein Überfahren des Bordsteins vermieden werden soll, vom Luftdruck des mindestens einen Reifens, der den Bordstein überfahren soll, ab.

Wenn die Entscheidung, ob ein Überfahren eines Bordsteins beim Einparkvorgang vermieden werden soll anhand des Luftdrucks des mindestens einen Reifens, der den Bordstein überfahren soll, getroffen wird, wird der Luftdruck vorzugsweise über geeignete Reifendrucksensoren erfasst. Geeignete Reifendrucksensoren sind im Handel erhältlich und dem Fachmann bekannt. Die von den Reifendrucksensoren erfassten Daten werden dem verwendeten Einparkassistenzsystem zur Verfügung gestellt, so dass dieses anhand der erfassten Daten bezüglich des Reifendrucks entscheiden kann, ob ein freier Platz als geeignete Parklücke verworfen werden soll, weil der vom Reifendrucksensor gemessene Druck von dem für das Überfahren eines Bordsteins zulässigen Druck abweicht.

Weiterhin kann die Entscheidung, ob das Überfahren eines Bordsteins beim Einparkvorgang vermieden werden soll, auch vom verwendeten Reifentyp abhängen. So ist es zum Beispiel bei bestimmten Reifen möglich, dass diese beim Überfahren eines Bordsteins beschädigt werden können. Wenn die Entscheidung, ob ein Bordstein beim Einparkvorgang überfahren werden darf, vom Reifentyp abhängt, so sollte der Reifentyp zum Beispiel bei einem Reifenwechsel angegeben werden und in einem geeigneten Speicher, auf den vom Einparkassistenzsystem zugegriffen werden kann, abgelegt werden. Alternativ ist es selbstverständlich auch möglich, den Reifentyp durch beliebige andere, dem Fachmann bekannte Verfahren zu ermitteln und an das System zu übergeben.

Der verwendete Reifentyp umfasst sowohl den Reifenaufbau als auch den Reifenquerschnitt. Insbesondere der Reifenquerschnitt kann hinsichtlich des Überfahrens eines Bordsteins relevant sein. So kann zum Beispiel bei Einsatz eines Niederquerschnittsreifens beim Überfahren eines vergleichsweise hohen Bordsteins eine Beschädigung der verwendeten Felge auftreten, wohingegen bei einem Reifen mit einem sehr viel größeren Querschnitt keine Beschädigung beim Überfahren des gleichen Bordsteins auftritt.

Neben dem Verwerfen des freien Platzes als geeignete Parklücke, wenn ein Überfahren eines Bordsteins beim Einparkvorgang vermieden werden soll, aufgrund des Luftdrucks des mindestens einen Reifens, der den Bordstein überfahren soll, des verwendeten Reifentyps oder der vorgegebenen Maximalhöhe des Bordsteins, ist es alternativ auch möglich, dass über Eingabemittel vorgegeben werden kann, ob ein Überfahren eines Bordsteins beim Einparkvorgang vermieden werden soll. Die Eingabe, ob ein Überfahren eines Bordsteins beim Einparkvorgang vermieden soll, kann dabei zum Beispiel durch den Betreiber des Fahrzeugs, beispielsweise den Fahrer erfolgen. Alternativ ist es auch möglich, dass die Eingabe zum Beispiel durch einen Halter des Fahrzeugs, beispielsweise einen Fahrzeugverleiher oder Fuhrparkverwalter erfolgt. Insbesondere für Fahrzeugverleiher oder Fuhrparkverwalter ist das erfindungsgemäße Verfahren vorteilhaft, da die Fahrzeugflotte geschont werden kann, wenn freie Plätze immer dann als geeignete Parklücke verworfen werden, wenn im Bereich des freien Platzes ein Bordstein detektiert wird. Auf diese Weise wird bei Nutzung des Einparkassistenzsystems grundsätzlich nur dann ein freier Platz als geeignete Parklücke angeboten, wenn diese keinen Bordstein aufweist, der überfahren werden muss.

Wenn über Eingabemittel vorgegeben wird, ob ein Überfahren eines Bordsteins beim Einparkvorgang vermieden werden soll, so ist es einerseits möglich, dass die Eingabe beim Ausschalten des Motors verworfen wird. In diesem Fall ist jedes Mal erneut beim Start des Fahrzeugs anzugeben, ob bei nachfolgenden Einparkvorgängen ein Bordstein überfahren werden darf oder nicht.

In einer alternativen Ausführungsform wird die Vorgabe, dass ein Überfahren eines Bordsteins beim Einparkvorgang vermieden werden soll, bis zu einem Widerruf der Vorgabe beachtet. Der Widerruf dieser Vorgabe erfolgt dann ebenfalls über die Eingabemittel.

Zur Durchführung des erfindungsgemäßen Verfahrens wird eine Vorrichtung zur Erkennung einer zum Einparken geeigneten Parklücke eingesetzt, die Sensoren zur Erfassung der Umgebung umfasst, wobei die Sensoren derart ausgestaltet sind, dass diese auch einen Bordstein erfassen. Weiterhin umfasst die Vorrichtung eine Auswerteeinheit zur Beurteilung, ob ein für eine Parklücke ausreichend großer Platz vorliegt, zum Prüfen, ob der für eine Parklücke ausreichend große freie Platz einen Bordstein aufweist, der zum Erreichen einer Parkposition in der Parklücke mit mindestens einem Rad des Fahrzeugs überwunden werden muss, und, wenn der freie Platz einen Bordstein aufweist, zum Prüfen, ob ein Überfahren des Bordsteins vermieden werden soll.

Die eingesetzte Vorrichtung ist dabei im Allgemeinen Teil eines Einparkassistenzsystems.

Insbesondere wenn die Vorrichtung Teil eines Einparkassistenzsystem ist, ist es zum Beispiel auch möglich, sobald ein freier Platz als geeignete Parklücke identifiziert wurde, den Fahrer beim Einparken in die Parklücke zu unterstützen. Dies kann zum Beispiel durch Anzeigen des Abstandes zu die Parklücke begrenzenden Objekten erfolgen. Alternativ ist es auch möglich, dass zunächst aus den Daten der Umgebung des Fahrzeuges eine Einparktrajektorie berechnet wird und der Fahrer anschließend Lenkhinweise erhält, um das Fahrzeug entlang der Einparktrajektorie in die Parklücke zu bewegen. Auch ist es möglich, dass das Einparkassistenzsystem einen Stellantrieb umfasst, der die Lenkeingriffe übernimmt und somit die Steuerung des Fahrzeuges. Vom Fahrer sind in diesem Fall lediglich die Längsführungsbewegungen, das heißt Bremsen und Beschleunigen des Fahrzeuges vorzunehmen.

In einer alternativen Ausführungsform umfasst das Einparkassistenzsystem auch Mittel zur Längsführung, so dass auch das Bremsen und Beschleunigen des Fahrzeugs vom Einparkassistenzsystem übernommen wird und der Fahrer lediglich eine überwachende Funktion hat.

Die zur Erfassung der Umgebung des Fahrzeugs eingesetzten Sensoren, sind vorzugsweise Abstandssensoren. Als Abstandssensoren eignen sich zum Beispiel Ultraschallsensoren, Radarsensoren, Infrarotsensoren, kapazitive Sensoren oder LIDAR-Sensoren. Alternativ zu Abstandssensoren können auch optische Sensoren, beispielsweise in Form einer Kamera eingesetzt werden. Auch können unterschiedliche Arten von Abstandssensoren und optischen Sensoren in Kombination verwendet werden. Üblicherweise wird jedoch nur eine Art Abstandssensoren eingesetzt.

Wenn die Entscheidung, ob das Überfahren eines Bordsteins beim Einparkvorgang vermieden werden soll, abhängig ist vom Reifendruck, umfasst die Vorrichtung weiterhin Sensoren zur Erfassung des Luftdrucks in den Reifen. Hierzu können übliche, dem Fachmann bekannte Reifendrucksensoren eingesetzt werden. Der von den Sensoren erfasste Reifendruck wird dann dem Einparkassistenzsystem bzw. der Vorrichtung zur Erkennung einer zum Einparken geeigneten Parklücke zur Verfügung gestellt. Zusätzlich ist es vorteilhaft, insbesondere wenn der mit den Reifendrucksensoren gemessene Reifendruck von einem Solldruck abweicht, den Fahrer zu informieren. Die Information des Fahrers kann zum Beispiel über ein geeignetes Ausgabegerät, beispielsweise eine Anzeigevorrichtung eines Bordcomputers erfolgen.

Um den Fahrer zu informieren, ob ein freier Platz als Parklücke geeignet ist, umfasst die Vorrichtung weiterhin vorzugsweise eine Anzeigevorrichtung. Als Anzeigevorrichtung eignet sich zum Beispiel eine Anzeige eines Bordcomputers. Hierzu ist die Anzeigevorrichtung mit der Auswerteeinheit der Vorrichtung zur Erkennung einer zum Einparken geeigneten Parklücke verbunden. Über die entsprechende Anzeigevorrichtung können auch weitere Informationen an den Fahrer übermittelt werden. So ist es zum Beispiel vorteilhaft, wenn dem Fahrer bei einem semi-automatischen Einparksystem, das heißt einem Einparksystem, bei dem vom Einparkassistenzsystem Lenkanweisungen vorgegeben werden oder die Lenkeingriffe automatisiert erfolgen, oder bei einem vollautomatischen Einparksystem, das heißt einem System, bei dem auch die Längsführung vom Einparkassistenzsystem übernommen wird, dem Fahrer die Position der lenkbaren Räder dargestellt wird. Dies ist insbesondere dann hilfreich, wenn die Steuerung des Fahrzeugs vom Einparkassistenzsystem wieder an den Fahrer übergeben wird.

Weiterhin kann über die entsprechende Anzeigevorrichtung auch der Abstand des Fahrzeugs zu Objekten in der Fahrzeugumgebung dargestellt werden. Dies kann zum Beispiel durch eine schematische Darstellung des Fahrzeugs in Draufsicht erfolgen, wobei Objekte, die sich in Fahrzeugumgebung befinden an der entsprechenden Position der Anzeigevorrichtung in Relation zum dargestellten Fahrzeug gezeigt werden.

Wenn über Eingabemittel vorgegeben werden soll, ob ein Überfahren eines Bordsteins beim Einparkvorgang vermieden werden soll, so ist die Auswerteeinheit mit den entsprechenden Eingabemitteln verbunden. Als Eingabemittel eignen sich zum Beispiel Schalter, Taster oder berührungsempfindliche Anzeigevorrichtungen, wie Touchscreens. Über die entsprechenden Eingabemittel kann ein Benutzer dem System mitteilen, dass ein freier Platz als geeignete Parklücke verworfen werden soll, wenn ein Überfahren eines Bordsteins beim Einparkvorgang erforderlich ist. Wenn freie Plätze als geeignete Parklücke verworfen werden sollen, sobald ein Überfahren eines Bordsteins erforderlich ist, wird dies zum Beispiel in einem Speicher, auf den von der Auswerteeinheit zugegriffen werden kann, abgelegt. Hierzu ist es zum Beispiel möglich, einen Flag zu setzen, wenn ein Überfahren eines Bordsteins vermieden werden soll und den Flag nicht zu setzen, wenn ein Überfahren eines Bordsteins ermöglicht werden soll.

## Patentansprüche

1. Verfahren zur Erkennung einer zum Einparken eines Fahrzeugs geeigneten Parklücke, folgende Schritte umfassend:
(a) Erfassen der Umgebung des Fahrzeugs und Beurteilen, ob ein für eine Parklücke ausreichend großer freier Platz vorliegt,
(b) Prüfen, ob der für eine Parklücke ausreichend große freie Platz einen Bordstein aufweist, der zum Erreichen einer Parkposition in der Parklücke mit mindestens einem Rad des Fahrzeugs überwunden werden muss,
Gekenzeichnet durch den Folgenden Schritt:
(c) Verwerfen des freien Platzes als geeignete Parklücke, wenn ein Überfahren eines Bordsteins beim Einparkvorgang vermieden werden soll oder aufgrund des Bordsteins größere Abmessungen des freien Platzes erforderlich sind.

2. Verfahren gemäß Anspruch 1, **dadurch gekennzeichnet, dass** ein Überfahren eines Bordstein beim Einparkvorgang vermieden werden soll, wenn der Bordstein eine Höhe aufweist, die oberhalb einer vorgegebenen Maximalhöhe liegt, der Luftdruck des mindestens einen Reifens, der den Bordstein überfahren soll, von einem vorgegebenen Soll-Luftdruckbereich abweicht und/oder ein Reifentyp verwendet wird, der bei Überfahren des Bordsteins beschädigt werden kann.

3. Verfahren gemäß Anspruch 2, **dadurch gekennzeichnet, dass** die vorgegebene Maximalhöhe, oberhalb derer ein Überfahren des Bordsteins vermieden werden soll, abhängig ist vom Luftdruck des mindestens einen Reifens, der den Bordstein überfahren soll.

4. Verfahren gemäß Anspruch 1, **dadurch gekennzeichnet, dass** über Eingabemittel vorgegeben werden kann, ob ein Überfahren eines Bordsteins beim Einparkvorgang vermieden werden soll.

5. Verfahren gemäß Anspruch 4, **dadurch gekennzeichnet, dass** die Vorgabe, dass ein Überfahren eines Bordsteins beim Einparkvorgang vermieden werden soll, bis zu einem Widerruf der Vorgabe beachtet wird.

6. Vorrichtung zur Erkennung einer zum Einparken geeigneten Parklücke, umfassen Sensoren zur Erfassung der Umgebung, wobei die Sensoren derart ausgestaltet sind, dass diese auch einen Bordstein erfassen, sowie eine Auswerteeinheit zur Beurteilung, ob ein für eine Parklücke ausreichend großer Platz vorliegt, zum Prüfen, ob der für eine Parklücke ausreichend große freie Platz einen Bordstein aufweist, der zum Erreichen einer Parkposition in der Parklücke mit mindestens einem Rad des Fahrzeugs überwunden werden muss, und, wenn der freie Platz einen Bordstein aufweist, zum Verwerfen des freien Platzes als geeignete Parklücke, wenn ein Überfahren eines Bordsteins beim Einparkvorgang vermieden werden soll oder aufgrund des Bordsteins größere Abmessungen des freien Platzes erforderlich sind.

7. Vorrichtung gemäß Anspruch 6, **dadurch gekennzeichnet, dass** die Sensoren zur Umfassung der Umgebung Abstandssensoren, vorzugsweise Ultraschallsensoren, Radarsensoren, kapazitive Sensoren, Infrarotsensoren oder LIDAR-Sensoren sind.

8. Vorrichtung gemäß Anspruch 6 oder 7, **dadurch gekennzeichnet, dass** Sensoren zur Erfassung des Luftdrucks in den Reifen umfasst sind.

9. Vorrichtung gemäß einem der Ansprüche 6 bis 8, **dadurch gekennzeichnet, dass** die Auswerteeinheit mit Eingabemitteln verbunden ist, mit denen vorgebbar ist, ob ein Überfahren eines Bordsteins beim Einparkvorgang vermieden werden soll.

10. Vorrichtung gemäß Anspruch 9, **dadurch gekennzeichnet, dass** die Eingabemittel ausgewählt sind aus Schaltern, Tastern oder berührungsempfindlichen Anzeigevorrichtungen.

## Claims

1. Method for detecting a parking space suitable for parking a vehicle, comprising the following steps:
(a) detection of the surroundings of the vehicle and assessment whether a sufficiently large free space is available for a parking space,
(b) testing whether the sufficiently large free space for a parking space has a kerb which at least one wheel of the vehicle has to travel over in order to reach a parked position in the parking space,
**characterized by** the following step:
(c) rejection of the free space as a suitable parking space if travel over a kerb during the parking process is to be avoided or relatively large dimensions of the free space are necessary owing to the kerb.

2. Method according to Claim 1, **characterized in that** travel over a kerb during the parking process is to be avoided if the kerb has a height which is above a predefined maximum height, the air pressure of the at least one tyre which is to travel over the kerb deviates from a predefined setpoint air pressure range and/or a type of tyre is used which can be damaged when the kerb is travelled over.

3. Method according to Claim 2, **characterized in that** the predefined maximum height above which travel over the kerb is to be avoided is dependent on the air pressure of the at least one tyre which is to travel over the kerb.

4. Method according to Claim 1, **characterized in that** input means can be used to prescribe whether travel over a kerb during the parking process is to be avoided.

5. Method according to Claim 4, **characterized in that** the prescription that travel over a kerb during the parking process is to be avoided is complied with until the prescription is revoked.

6. Device for detecting a parking space suitable for parking, comprising sensors for detecting the surroundings, wherein the sensors are configured in such a way that they also detect a kerb, as well as an evaluation unit for assessing whether a sufficiently large space is available for a parking space, in order to test whether the sufficiently large free space for a parking space has a kerb which at least one wheel of the vehicle has to travel over in order to reach a parked position in the parking space, and if the free space has a kerb, for rejecting the free space as a suitable parking space if travel over a kerb during the parking process is to be avoided or relatively large dimensions of the free space are necessary owing to the kerb.

7. Device according to Claim 6, **characterized in that** the sensors for detecting the surroundings are distance sensors, preferably ultrasonic sensors, radar sensors, capacitive sensors, infrared sensors or LIDAR sensors.

8. Device according to Claim 6 or 7, **characterized in that** sensors for detecting the air pressure in the tyres are included.

9. Device according to one of Claims 6 to 8, **characterized in that** the evaluation unit is connected to input means with which it is possible to prescribe whether travel over a kerb during the parking process is to be avoided.

10. Device according to Claim 9, **characterized in that** the input means are selected from switches, push button keys or touch-sensitive display devices.

## Revendications

1. Procédé de détection d'un emplacement de stationnement qui convient pour stationner un véhicule, le procédé comportant les étapes suivantes, qui consistent à :
(a) saisir l'environnement du véhicule et vérifier s'il existe un emplacement libre suffisamment grand pour un stationnement,
(b) vérifier si l'emplacement libre suffisamment grand pour un stationnement présente une bordure qu'au moins une roue du véhicule doit franchir pour atteindre une position de stationnement dans l'emplacement de stationnement,
**caractérisé par** l'étape suivante, qui consiste à :
(c) refuser l'emplacement libre comme emplacement de stationnement inapproprié si le franchissement d'une bordure doit être évité lors de l'opération de stationnement ou si, du fait de la présence de la bordure, l'emplacement libre doit présenter de plus grandes dimensions.

2. Procédé selon la revendication 1, **caractérisé en ce que** le franchissement d'une bordure lors de l'opération de stationnement doit être évité si la bordure présente une hauteur supérieure à une hauteur maximale prédéterminée, si la pression de l'air du ou des bandages de roue qui doivent franchir la bordure s'écarte d'une plage prédéterminée de pression d'air de consigne et/ou si le type de bandage de roue utilisé peut être endommagé lors du franchissement de la bordure.

3. Procédé selon la revendication 2, **caractérisé en ce que** la hauteur maximale prédéterminée au-dessus de laquelle le franchissement de la bordure doit être évité dépend de la pression d'air du ou des bandages de roue qui doivent franchir la bordure.

4. Procédé selon la revendication 1, **caractérisé en ce que** des moyens d'introduction permettent de définir si le franchissement d'une bordure doit être évité lors de l'opération de stationnement.

5. Procédé selon la revendication 4, **caractérisé en ce que** la condition selon laquelle le franchissement d'une bordure doit être évité lors d'une opération de stationnement est prise en compte jusqu'à la révocation de la condition.

6. Dispositif de détection d'un emplacement de stationnement qui convient pour le stationnement, le dispositif comprenant des détecteurs de saisie de l'environnement, les détecteurs étant configurés de telle sorte qu'ils saisissent également une bordure, ainsi qu'une unité d'évaluation qui juge si l'emplacement de stationnement présente une place suffisamment grande pour vérifier si l'emplacement de stationnement de place suffisamment grande présente une bordure qui doit être franchie par au moins une roue du véhicule pour atteindre une position de stationnement et, si l'emplacement libre présente une bordure, pour refuser l'emplacement libre comme emplacement de stationnement inapproprié si le franchissement d'une bordure doit être évité lors de l'opération de stationnement ou si, du fait de la présence de la bordure, l'emplacement libre doit présenter de plus grandes dimensions.

7. Dispositif selon la revendication 6, **caractérisé en ce que** les détecteurs de saisie de l'environnement sont des détecteurs de distance, de préférence des détecteurs à ultrasons, des détecteurs radar, des détecteurs capacitifs, des détecteurs à infrarouge ou des détecteurs LIDAR.

8. Dispositif selon les revendications 6 ou 7, **caractérisé en ce que** les détecteurs de saisie de la pression d'air sont inclus dans les bandages de roue.

9. Dispositif selon l'une des revendications 6 à 8, **caractérisé en ce que** l'unité d'évaluation est reliée à des moyens d'introduction qui permettent de définir si le franchissement d'une bordure doit être évité lors d'une opération de stationnement.

10. Dispositif selon la revendication 9, **caractérisé en ce que** les moyens d'introduction sont sélectionnés parmi des commutateurs, des touches ou des dispositifs d'affichage tactile.
